Europäisches Patentamt

(19) European Patent Office

Office européen des brevets

(11) Numéro de publication: **0 145 520**
**B1**

(12) **FASCICULE DE BREVET EUROPEEN**

(45) Date de publication du fascicule du brevet: **04.01.89**

(51) Int. Cl.⁴: **G 09 G 3/36,** G 02 F 1/133

(21) Numéro de dépôt: **84401967.9**

(22) Date de dépôt: **02.10.84**

(54) **Ecran d'affichage à matrice active sans croisement des lignes et des colonnes d'adressage.**

(30) Priorité: **07.10.83 FR 8315996**

(43) Date de publication de la demande:
**19.06.85 Bulletin 85/25**

(45) Mention de la délivrance du brevet:
**04.01.89 Bulletin 89/01**

(84) Etats contractants désignés:
**CH DE GB IT LI NL SE**

(56) Documents cités:
**EP-A-0 034 796**
**EP-A-0 070 598**
**US-A-4 233 602**

**CONFERENCE RECORD OF 1978 BIENNIAL DISPLAY RESEARCH CONFERENCE, 24-26 octobre 1978, Cherry Hill, N.J., US, pages 42-43, IEEE, Piscataway, US; D.E. CASTLEBERRY: "Varistor controlled multiplexed liquid crystal display"**

(73) Titulaire: **COMMISSARIAT A L'ENERGIE ATOMIQUE**
**31/33, rue de la Fédération**
**F-75015 Paris (FR)**

(72) Inventeur: **Chenevas-Paule André**
**42 rue de Stalingrad**
**F-38100 Grenoble (FR)**
Inventeur: **Clerc, Jean-Frédéric**
**10 Allée du Pré Blanc**
**F-38240 Meylan (FR)**

(74) Mandataire: **Mongrédien, André et al**
**c/o BREVATOME 25, rue de Ponthieu**
**F-75008 Paris (FR)**

Courier Press, Leamington Spa, England.

## Description

La présente invention a pour objet un écran d'affichage à matrice active sans croisement des conducteurs d'adressage lignes et colonnes. Elle trouve une application en optoélectronique dans la réalisation d'afficheurs à cristaux liquides utilisés notamment comme convertisseurs d'information électriques en informations optiques.

La plupart des écrans d'afficharge à cristaux liquides d'une complexité égale ou supérieure à $10^5$ points élémentaires d'image utilisent un adressage matriciel. Ce mode d'adressage possède des limitations propres qui sont en particulier étudiées dans l'article "Perspective actuelle de présentation d'images sur panneaux plats" paru dans la revue "OPTO" no 6, septembre 1981, pages 29 à 31. Ces limitations concernent principalement, d'une part, la sélectivité d'adressage d'un point élémentaire d'image et d'autre part, la vitesse d'affichage.

Pour sélectionner un point d'image particulier, il faut en effet que la différence de potentiel entre la ligne et la colonne à l'intersection desquelles se trouve ledit point d'image soit supérieure à une tension de seuil $V_s$ et que simulanément la tension en chacun des autres points d'image soit notablement inférieure à cette même tension de seuil $V_s$. Ceci est généralement réalisé en appliquant des tensions non nulles et judicieusement choisies sur les lignes et les colonnes non sélectionnées. Il en résulte une dépense énergétique importante qui croît linéairement avec le nombre de lignes.

Par ailleurs, plus le nombre de lignes d'affichage est important, plus la vitesse d'inscription est élevée. L'intervalle de temps séparant l'inscription de deux lignes successives est donc faible et la puissance moyenne nécessaire croît. Il y a donc un comprimis entre la dimension de l'écran, la puissance disponible et la rapidité d'adressage.

Pour dépasser les limitations de l'adressage matriciel, un type de solution connu consiste à incorporer le seuil électrique et l'effet mémoire au niveau de chaque point d'image. Ce seuil peut être assuré par un transistor en couche mince, par un varistor ou par un commutateur MIM (métal-isolant-métal), ou autre. Une telle structure est dite à matrice active.

Dans une matrice active, chaque point d'image est donc situé au croisement d'une ligne et d'une colonne de connexion et il est constitué d'un transistor, par exemple, et d'un condensateur.

Dans le cas où le transducteur optoélectronique est un cristal liquide, les armatures du condensateur peuvent être constituées par les électrodes de la cellule à cristal liquide elle-même. Le point d'image se ramène donc à un transistor et à un condensateur dont l'une des armatures est constituée par l'électrode disposée sur la paroi de la cellule qui contient le transistor, l'autre armature étant constituée par la contre-électrode disposée sur l'autre paroi de la cellule.

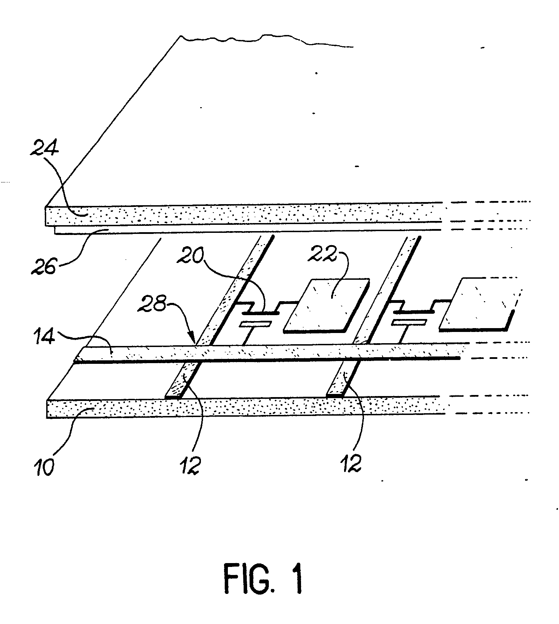

Une telle structure est représentée sur la figure 1. On y voit, d'une part, une paroi inférieure 10 portant des colonnes conductrices 12 et des lignes conductrices 14, un transistor en couche mince 20 et une électrode transparente 22, et d'autre part, une paroi supérieure 24 recouverte d'une contre-électrode 26 également transparente.

A chaque croisement 28 de conducteurs, lignes et colonnes, il faut évidemment assurer l'isolement électrique desdits conducteurs. Ceci constitue précisément l'un des problèmes technologiques mal résolus à ce jour. En effet, de nombreux courts-circuits se produisent sur ces croisements rendant le plus souvent inutilisable la matrice active et faisant chuter d'autant les rendements de fabrication.

Des structure d'écran d'affichage ont été décrites, on pourra se référer à la demande de brevet européen EP—A—0 034 796 et plus particulièrement à la demande EP—A—070 598 dans lesquelles une structure d'affichage a été décrite.

La structure décrite dans la demande EP—A—070 598 comprend deux plaques support entre lesquelles un transducteur optoélectronique est placé. Cependant une telle structure, qui comporte d'ailleurs des éléments de commutation réalisés à partir de diodes tête-bêche, ne permet pas d'obtenir une architecture de matrice active dans laquelle les éléments de commutation sont des transistors et dans laquelle on a supprimé les croisements des conducteurs ligne et colonne de l'écran d'affichage.

Pour remédier à ces inconvénients, l'invention propose une architecture de-matrice active supprimant ces croisements de conducteurs lignes et colonnes.

Plus précisément, l'invention remplace sur la face supérieure la contre-électrode par une famille d'électrodes colonnes. La face inférieure ne supporte plus les colonnes conductrices. Les croisements de lignes et colonnes conductrices étant supprimés, les courts-circuits sont éliminés et le rendement de fabrication d'une telle matrice active est augmenté de façon notable.

Un autre avantage de l'invention réside dans la simplification de la fabrication d'un écran d'affichage. En effet, la première paroi contient toute la logique lente réalisée par exemple en Si hydrogéné et la deuxième paroi contient toute la logique rapide réalisée par exemple en Si polycrystallin alors que dans l'art antérieur ces deux technologies sont réalisées sur le même substrat.

Enfin, on peut noter que le test de contrôle d'une ligne de point d'image est très simple.

L'invention a donc pour objet un écran d'affichage à matrice active comprenant un matériau dont on peut modifier la caractéristique optique, ce matériau étant intercalé entre une première paroi et une seconde paroi transparente, ledit écran comportant une pluralité de points d'image disposés en une matrice de p×q éléments, où $1<p$ et $1<q$, une première famille de p conducteurs d'adressage d'une ligne de points d'image, une deuxième famille de q conducteurs d'adressage d'une colonne de points d'image, chaque point d'image étant constitué d'un élément de commutation et d'un condensateur formé de deux électrodes disposées chacune sur l'une des deux parois, la première paroi dudit écran portant une matrice d'éléments constitués chacun de l'élément de commutation et d'une électrode et portant la première famille de p conducteurs lignes et la deuxième paroi transparente portant une famille de q électrodes colonnes et la deuxième famille de q conducteurs colonnes, les électrodes et conducteurs de même rang étant reliés entre eux, ledit écran étant caractérisé en ce que l'élément de commutation de chaque point d'image est un transistor en couche mince dont la grille est reliée à un conducteur ligne, la source à un potentiel de référence constant (VS) et le drain à l'électrode associée audit transistor faisant partie d'un élément de la matrice portée par la première paroi et en ce que à chaque ligne de points d'image sont associés un conducteur ligne disposé d'un côté de ladite ligne de points d'image et parallèlement à celle-ci et un conducteur porté au potentiel constant (V$_s$) et disposé parallèlement à ladite ligne de points d'image, de l'autre côté de celle-ci.

Selon une caractéristique de l'écran de l'invention, à chaque ligne de points d'image sont associés un conducteur ligne disposé d'un côté de ladite ligne de points d'image et parallèlement à celle-ci, et un conducteur porté au potentiel constant et disposé parallèlement à ladite ligne de points d'image, de l'autre côté de celle-ci.

Selon une caractéristique secondaire, la valeur moyenne du signal appliqué sur chaque électrode colonne est constante sur la période d'une trame.

Selon une autre caractéristique secondaire, la largeur $\tau_c$ du créneau du signal appliqué sur chaque électrode colonne pendant le temps $\tau_L$ d'adressage d'une ligne est égale à $\tau_L/2$.

Selon une autre caractéristique secondaire, le signal d'adressage ligne contient, pendant chaque trame, un créneau unique et de largeur $\tau_L/2$.

D'autres caractéristiques et avantages de l'invention ressortiront mieux de la description qui va suivre, donnée à titre purement illustratif et nullement limitatif, en référence aux figures annexées, dans lesquelles:

la figure 1, déjà décrite, illustre un mode de réalisation connu d'un écran d'affichage à matrice active,

la figure 2 représente, schématiquement, la matrice de transistors et d'électrodes ainsi que les conducteurs lignes réalisés sur l'une des parois de la cellule,

la figure 3 représente, schématiquement, les électrodes colonnes et les conducteurs colonnes réalisés sur l'autre paroi de la cellule,

la figure 4 est un chronogramme illustrant la commande d'un point d'image.

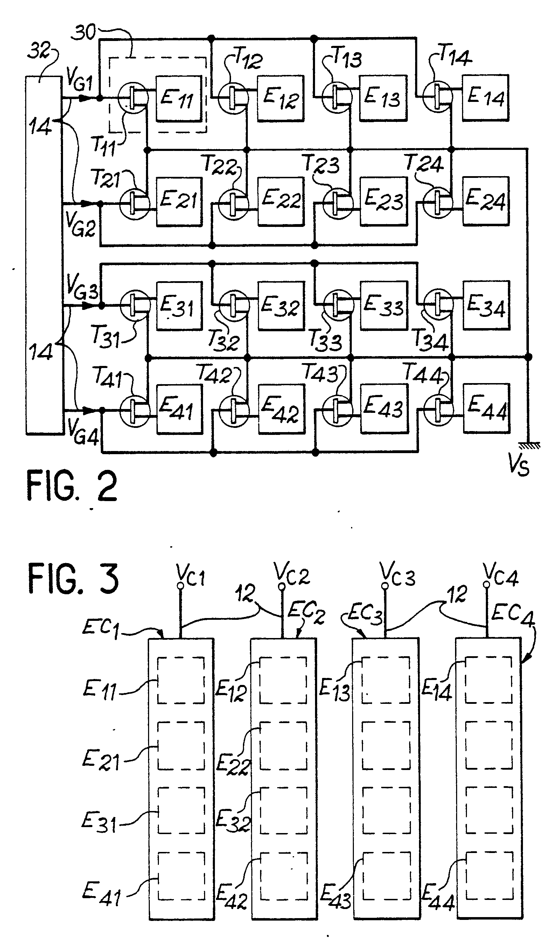

On a représenté sur la figure 2 les éléments de la matrice active réalisés sur l'une des paroids d'un écran d'affichage conforme à l'invention. Cet écran comprend 16 points d'image disposés dans une matrice 4×4. Chaque élément 30 constitue une partie d'un point d'image. Chacune de ces éléments est constitué d'un transistor en couche mince noté T et d'une électrode notée E. Ces transistor et électrode sont reprérés classiquement par des chiffres en indice indiquant leur numéro de ligne et de colonne dans la matrice.

Les grilles de tous les transistors d'une même ligne sont reliées entre elles. Le potentiel appliqué sur la ième ligne, où $1 < i < 4$, est noté $V_{Gi}$. Ce potentiel ligne est délivré par un registre à décalage 32 qui délivre un créneau de tension successivement sur chacun des conducteurs lignes 14.

La source de chaque transistor de la matrice est reliée à un potentiel constant $V_s$. Ce potentiel agit comme une source de charge pour chacune des électrodes des éléments 30 dont le transistor est activé par un créneau de tension sur sa grille.

L'absence de croisement entre les conducteurs de lignes amenant les tensions $V_{G1}$, $V_{G2}$, $V_{G3}$ et $V_{G4}$ et les conducteurs amenant le potentiel constant $V_s$ peut s'obtenir, comme représenté sur la figure 2, de la manière suivante. Tous ces conducteurs sont tracés parallèles entre eux et à une ligne de points d'image et les deux conducteurs associés à chaque ligne de points d'image sont disposés chacun d'un côté de cette ligne de points d'image.

La figure 3 représente la partie de la matrice active d'un écran d'affichage réalisée sur l'autre paroi de cet écran. Sur cette paroi, ont été réalisées 4 électrodes colonnes $EC_1$, $EC_2$, $EC_3$, $EC_4$. Chacune de ces électrodes est reliée à un conducteur colonne 12.

Pour une bonne compréhension de l'architecture de la matrice active selon l'invention, on a représenté en traits tiretés la matrice d'électrodes réalisée sur la première paroi. Chaque point d'affichage d'un point d'image est donc constitué par la zone où une électrode d'une paroi et une électrode de l'autre paroi sont superposées. Ces points d'affichage sont en fait géométriquement confondus avec les électrodes de la première paroi.

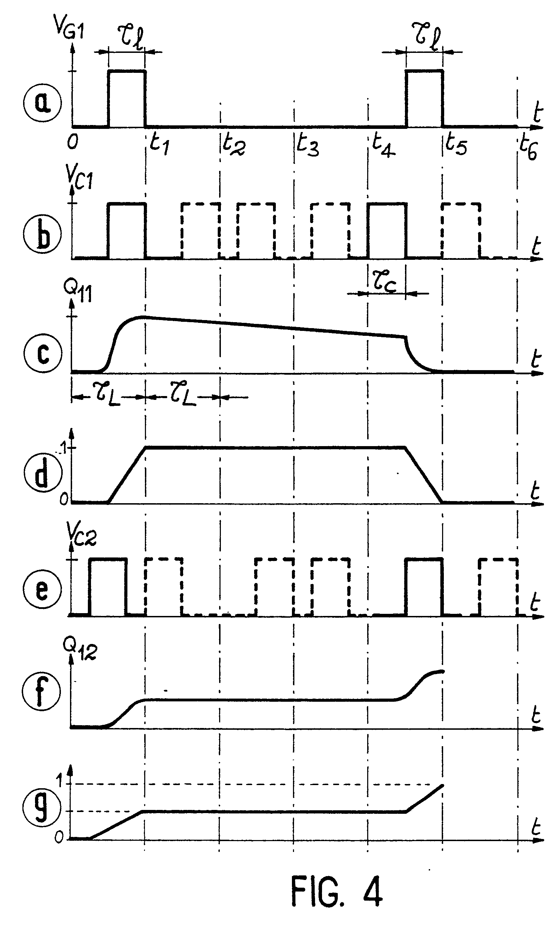

Le fonctionnement de l'écran d'affichage de la matrice active décrit en référence aux figures 2 et 3, c'est-à-dire la manière de commander l'affichage d'un point quelconque de cet écran, va être expliqué à l'aide des chronogrammes des figures 4a à 4g.

La figure 4a représente la tension $V_{G1}$ appliquée sur la grille des transistors de la première ligne, c'est-à-dire sur les transistors $T_{11}$, $T_{12}$, $T_{13}$ et $T_{14}$. L'axe des temps est divisé en intervalles de longeur constante. L'intervalle de temps compris entre les dates 0 et $t_4$ correspond à une trame, c'est-à-dire au temps d'adressage de tous les points d'image.

La longeur $\tau_L$ est égale à la durée de l'adressage d'une ligne de l'écran. Chaque point de la ligne n'est en fait activé que pendant l'intervalle de temps $\tau_i$ pendant lequel la tension de ligne $V_{G1}$ n'est pas nulle.

De manière préférée, cet intervalle de temps $\tau_i$ est au moins égal à la moitié de l'intervalle de temps $\tau_L$ d'adressage de la ligne.

La figure 4b représente la tension $V_{C1}$ appliquée sur l'électrode $EC_1$ (figure 3) en fonction du temps. Ce potentiel $V_{C1}$, ou plus exactement la différence entre le potentiel $V_{C1}$ et le potentiel source constant $V_s$ détermine, lorsque la première ligne de transistor est adressée, la charge du point d'image situé à l'intersection de la première ligne et de la première colonne.

Le signal $V_{C1}$ est constitué d'un créneau de largeur $\tau_c$ dans chaque intervalle de temps $\tau_L$. Les créneaux en traits tiretés correspondent à l'adressage des points d'image situés à l'intersection de la première colonne et, respectivement, des deuxième, troisième et quatrième lignes. La position du créneau du signal $V_{C1}$ dans l'intervalle $\tau_L$ détermine le niveau de gris du point d'image.

On a représenté sur la figure 4c la charge $Q_{11}$ du condensateur constituant le point d'affichage situé à l'intersection de la première ligne et de la première colonne. Pendant l'intervalle de temps s'écoulant entre les dates 0 et $t_1$, le signal $V_{G1}$ présente un créneau de tension, les points d'image de la première ligne sont donc adressés. Pendant ce créneau, le signal $V_{C1}$ présente également un créneau de tension. Le condensateur se charge donc.

Pendant l'intervalle de temps s'écoulant entre les dates $t_1$ à $t_4$, le signal $V_{G1}$ ne présente pas de créneau de tension. La charge $Q_{11}$ est donc conservée. Lorsqu'apparaît un créneau de tension sur le signal $V_{G1}$, la charge du condensateur est modifiée. Le signal colonne $V_{C1}$ étant alors nul à cet instant, le condensateur se décharge.

L'aspect optique lié à l'effet capacitif représenté sur la figure 4c est illustré sur la figure 4d. La courbe de cette figure représente le niveau de gris du point d'image. A l'instant initial, le point est noir, puis lorsque la capacité se charge le point image devient blanc. Il redevient noir lorsque la capacité se décharge entre les instants $t_4$ et $t_5$.

Les figures 4d, 4e et 4f représentent, pour le point d'image situé à l'intersection de la première ligne et de la deuxième colonne, respectivement les mêmes courbes que celles représentées en 4b, 4c et 4d pour le point d'image situé à l'intersection de la première ligne et de la première colonne.

Le créneau de tension du signal $V_{C2}$ appliqué sur la deuxième électrode colonne entre les instants 0 et $t_1$ recouvre partiellement le créneau de tension appliqué pendant ce même instant sur le signal $V_{G1}$. Il en résulte une charge partielle sur le consensateur $Q_{12}$ du point d'image. Cette charge n'est pas altérée, aux fuites de capacité près, jusqu'à ce qu'un nouveau créneau de tension apparaisse sur le signal $V_{G1}$. Ceci se produit entre les instants $t_4$ et $t_5$. Le créneau de tension apparaissant dans cet intervalle de temps sur le signal colonne $V_{C2}$ recouvre totalement le créneau de tension du signal $V_{G1}$. Le condensateur du point d'image se charge donc complètement.

Du point de vue optique (figure 4g), le point d'image passe du noir à un niveau de gris entre les instants de début et de fin du créneau de tension sur le signal $V_{G1}$. Il passe ensuite de ce niveau de gris au niveau blanc entre les instants de début et de fin du créneau de tension consécutif du signal $V_{G1}$.

**Revendications**

1. Ecran d'affichage à matrice active comprenant un matériau dont on peut modifier la caractéristique optique, ce matériau étant intercalé entre une première paroi (10) et une seconde paroi (24) transparente, ledit écran comportant une pluralité de points d'image disposés en une matrice de $p \times q$ éléments, où $1 < p$ et $1 < q$, une première famille de $p$ conducteurs lignes (14) d'adressage d'une ligne de points d'image, une deuxième famille de $q$ conducteurs colonnes (12) d'adressage d'une colonne de points d'image, chaque point d'image étant constitué d'un élément de commutation ($T_{11}$) et d'un condensateur formé de deux électrodes ($E_{11}$, $E_{C1}$) disposées chacune sur l'une des deux parois, la première paroi dudit écran portant une matrice d'éléments (30) constitués chacun dudit élément de commutation et d'une électrode et portant la première famille de $p$ conducteurs lignes, et la deuxième paroi transparente portant une famille de $q$ électrodes colonnes et la deuxième famille de $q$ conducteurs colonnes, les électrodes et conducteurs de même rang étant reliés entre eux, ledit écran étant caractérisé en ce que l'élement de commutation ($T_{11}$) de chaque point d'image est un transistor en couche mince dont la grille est reliée à un cônducteur ligne, la source à un potentiel de référence constant (VS) et le drain à l'électrode associée audit transistor faisant partie d'un élément de la matrice portée par la première paroi et en ce que à chaque ligne de points d'image sont associés un conducteur ligne (14) disposé d'un côté de ladite ligne de points d'image et parallèlement à celle-ci et un conducteur porté au potentiel constant ($V_s$) et disposé parallèlement à ladite ligne de points d'image, de l'autre côté de celle-ci.

2. Ecran d'affichage selon la revendication 1, caractérisé en ce que la valeur moyenne du signal ($V_{C1}$) appliqué sur chaque électrode colonne (12) est constante sur la période d'une trame.

3. Ecran d'affichage selon la revendication 2, caractérisé en ce que la largeur $\tau_c$ du créneau du signal ($V_{C1}$) appliqué sur chaque électrode colonne (12) pendant le temps $\tau_L$ d'adressage d'une ligne est égale à $\tau_L/2$.

4. Ecran d'affichage selon la revendication 2, caractérisé en ce que le signal ($V_{G1}$) d'adressage ligne (14) contient, pendant chaque trame, un créneau unique et de largeur $\tau_L/2$.

**Patentansprüche**

1. Bildschirm mit aktiver Matrix, enthaltend ein Material, dessen optische Eigenschaft veränderbar ist, wobei dies Material zwischen einer ersten Wand (10) und einer zweiten transparenten Wand (24) angeordnet ist und wobei der Schrim eine Vielzahl von Bildpunkten aufweist, die in Form einer Matrix $p \times q$ angeordnet sind, wobei $1 < p$ und $1 < q$ ist, eine erste Anzahl von $p$ Zeilenleitungen (14) aufweist zur Adressierung einer Bildpunktzeile, eine zweite Anzahl von $q$ Spaltenleitungen (12) aufweist zur Adressierung einer Bildpunktspalte, wobei jeder Bildpunkt aus einem Schaltteil $(T_{11})$ und einem Kondensator besteht, der durch zwei Elektroden $(E_{11}, E_{c1})$ gebildet wird, von denen je eine auf einer der Wände angeordnet ist, wobei die erste Wand des Schrims mit einer Matrix von Elementen (30) versehen ist, deren jedes aus dem Schaltteil und einer Elektrode besteht, sowie mit der ersten Anzahl von p Zeilenleitungen versehen ist und die zweite transparente Wand mit einer Anzahl von q Spaltenelektroden und der zweiten Anzahl von q Spaltenleitungen versehen ist, wobei die Elektroden und Leitungen mit der gleichen Ordnungszahl miteinander verbunden sind, dadurch gekennzeichnet, daß das Schaltteil $(T_{11})$ eines jeden Bildpunktes ein Dünnschichttransistor ist, dessen Gate mit einer Zeilenleitung verbunden ist, dessen Source mit einem konstanten Referenzpotential (VS) verbunden ist und dessen Drain mit der dem Transistor zugeordneten Elektrode verbunden ist, die Teil eines der Matrixelemente ist, mit der die erste Wand versehen ist und daß jeder Bildpunktzeile eine Zeilenleitung (14) zugeordnet ist, die auf einer Seite der Bildpunktzeile angeordnet ist und parallel zu ihr ist sowie eine Leitung zugeordnet ist, auf der das konstante Potential (VS) anliegt und die parallel zu dieser Bildpunktzeile auf deren anderen Seite angeordnet ist.

2. Bildschrim nach Anspruch 1, dadurch gekennzeichnet, daß der Mittelwert des einer jeden Spaltenelektrode (12) zugeführten Signals $(V_{C1})$ während der Dauer einer Bildzeile konstant ist.

3. Bildschirm nach Anspruch 2, dadurch gekennzeichnet, daß die Breite $(\tau_c)$ des einer jeden Spaltenelektrode (12) zugeführten rechteckförmigen Signals $(V_{C1})$ während der Adressierzeit $(\tau_L)$ einer Zeile gleich $\tau_L/2$ ist.

4. Bildschcrm nach Anspruch 2, dadurch gekennzeichnet, daß das Adressiersignal $(V_{G1})$ für die Zeile (14) während einer jeden Bildzeile einen einzigen Rechteckimpuls der Breite $\tau_L/2$ aufweist.

**Claims**

1. Active matrix display screen incorporating a material whose optical characteristic can be modified, said material being inserted between a first wall (10) and a second transparent wall (24), the screen having a plurality of image points arranged in a matrix of p×q elements, in which 1<p and 1<q, a first group of p addressing row conductors (14) of a row of image points, a second group of q addressing column conductors (12) of a column of image points, each image point being constituted by a switching element $(T_{11})$ and a capacitor formed from two electrodes $(F_{11}, E_{c1})$, each arranged on one of the two walls, the first wall of the screen carrying a matrix of elements (30), each constituted by the switching element and an electrode and carrying the first group of p row conductors and the second transparent wall carrying the group of q column electrodes and the second group of q column conductors, the electrodes and conductors of the same rank being interconnected, characterized in that in the said screen the switching element $(T_{11})$ of each image point is a thin film transistor, whose gate is connected to a row conductor, whose source is connected to a constant reference potential $(V_s)$ and whose drain is connected to the electrode associated with said transistor and in that with each row of image points are associated a row conductor (14) positioned on one side of said row of image points and parallel thereto and a conductor raised to constant potential $(V_s)$ and positioned parallel to said row of image points on the other side thereof.

2. Display screen according to Claim 1, characterized in that the mean value of the signal $(V_{C1})$ applied to each column electrode (12) is constant over one frame period.

3. Display screen according to Claim 2, characterized in that the width $\tau_c$ of the square wave pulse of the signal $(V_{C1})$ applied to each column electrode (12) during the addressing time $\tau_L$ of one row is equal to $\tau_{L/2}$.

4. Display screen according to Claim 2, characterized in that the addressing signal $(V_{G1})$ of row (14) contains, during each frame, a single square wave pulse and of width $\tau_{L/2}$.

FIG. 1

FIG. 2

FIG. 3

FIG. 4